(19)

Europäisches
Patentamt

European
Patent Office

Office européen
des brevets

(11) **EP 4 656 839 A1**

(12) **EUROPEAN PATENT APPLICATION**

(43) Date of publication:
    **03.12.2025 Bulletin 2025/49**

(21) Application number: **25173879.5**

(22) Date of filing: **01.05.2025**

(51) International Patent Classification (IPC):
    **F01D 5/06** *(2006.01)*      **F01D 17/04** *(2006.01)*
    **G01B 7/16** *(2006.01)*

(52) Cooperative Patent Classification (CPC):
    **F01D 5/066; F01D 17/04; G01B 7/16;**
    F05D 2270/808

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH LA MA MD TN**

(30) Priority: **02.05.2024  US 202418653721**

(71) Applicant: **RTX Corporation
    Farmington, CT 06032 (US)**

(72) Inventors:
    • **BALAMURUGAN, Kaliya
      Newington, 06111 (US)**
    • **PRIHAR, Ron I.
      West Hartford, 06117 (US)**
    • **VESTERGAARD, Lars H.
      Glastonbury, 06033 (US)**

(74) Representative: **Dehns
    10 Old Bailey
    London EC4M 7NG (GB)**

(54) **MEASUREMENT AND MONITORING OF ROTOR STACK LOAD IN ENGINE**

(57)    A system (300) includes a tie-shaft (304) configured to rotate about an axis. The system (300) also includes a rotor stack (306) tied to the tie-shaft (304) and configured to rotate with the tie-shaft (304), the rotor stack (306) comprising multiple rotors (308). The system (300) further includes a nut (310) coupled to the tie-shaft (304) and configured to apply a tension load (316) to the tie-shaft (304), resulting in an opposite compression load (314) on the rotor stack (306). The system (300) also includes at least one sensor (312) coupled to the rotor stack (306) and configured to measure the compression load (314) on the rotor stack (306). In addition, the system (300) includes at least one processing device (202) configured to receive multiple compression load measurements from the at least one sensor (312) over a time period and determine a change in the compression load (314) over the time period based on the received compression load measurements.

FIG. 3

EP 4 656 839 A1

## Description

TECHNICAL FIELD

This invention is generally directed to measurement systems and processes. More specifically, this invention is directed to measurement and monitoring of a rotor stack load in an engine, such as a turbine engine.

BACKGROUND

Many turbine engines include a stack of rotors, referred to as a rotor stack, which are assembled with a tie-shaft. These rotors are loaded with an axial force at the time of assembly. During engine operation, the rotors (which in some cases may be formed of a nickel alloy or another similar material) are known to see a decrease in applied axial assembly force due to engine operating conditions.

SUMMARY

This invention is directed to measurement and monitoring of a rotor stack load in an engine.

According to an aspect of the present invention, a system includes a tie-shaft configured to rotate about an axis. The system also includes a rotor stack tied to the tie-shaft and configured to rotate with the tie-shaft, the rotor stack comprising multiple rotors. The system further includes a nut coupled to the tie-shaft and configured to apply a tension load to the tie-shaft, resulting in an opposite compression load on the rotor stack. The system also includes at least one sensor coupled to the rotor stack and configured to measure the compression load on the rotor stack. In addition, the system includes at least one processing device configured to receive multiple compression load measurements from the at least one sensor over a time period and determine a change in the compression load over the time period based on the received compression load measurements.

According to another aspect of the present invention, a device includes at least one processing device configured to receive multiple compression load measurements over a time period from at least one sensor coupled to a rotor stack, the rotor stack tied to a tie-shaft and configured to rotate about an axis with the tie-shaft, the rotor stack comprising multiple rotors, the multiple compression load measurements related to a compression load on the rotor stack. A nut is coupled to the tie-shaft and is configured to apply a tension load to the tie-shaft, resulting in the compression load on the rotor stack. The at least one processing device is also configured to determine a change in the compression load over the time period based on the received compression load measurements.

According to another aspect of the present invention, a method includes receiving multiple compression load measurements over a time period from at least one sensor coupled to a rotor stack, the rotor stack tied to a tie-shaft and configured to rotate about an axis with the tie-shaft, the rotor stack comprising multiple rotors, the multiple compression load measurements related to a compression load on the rotor stack. A nut is coupled to the tie-shaft and is configured to apply a tension load to the tie-shaft, resulting in the compression load on the rotor stack. The method also includes determining a change in the compression load over the time period based on the received compression load measurements.

Other technical features may be readily apparent to one skilled in the art from the following figures, descriptions, and claims.

BRIEF DESCRIPTION OF THE DRAWINGS

For a more complete understanding of this invention and its advantages, reference is now made to the following description taken in conjunction with the accompanying drawings, in which like reference numerals represent like parts:

Figure 1 illustrates an example system in which measurement and monitoring of rotor stack load in an engine can be performed according to this invention;
Figure 2 illustrates an example device for measurement and monitoring of rotor stack load in an engine according to this invention;
Figure 3 illustrates an example system for measurement and monitoring of rotor stack load in an engine according to this invention;
Figure 4 illustrates an example process flow for assembly and use of the system of Figure 3 according to this invention; and
Figure 5 illustrates an example method for measurement and monitoring of rotor stack load according to this invention.

DETAILED DESCRIPTION

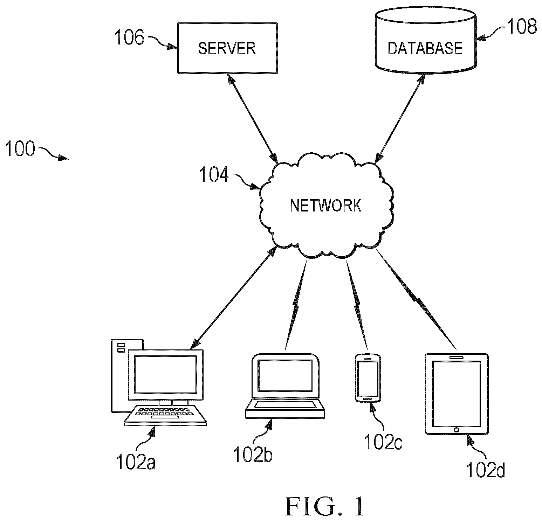

Figures 1 through 5, described below, and the various embodiments used to describe the principles of the present invention are by way of illustration only and should not be construed in any way to limit the scope of this invention. Those skilled in the art will understand that the principles of the present invention may be implemented in any type of suitably arranged device or system.

For simplicity and clarity, some features and components are not explicitly shown in every figure, including those illustrated in connection with other figures. It will be understood that all features illustrated in the figures may be employed in any of the embodiments described. Omission of a feature or component from a particular figure is for purposes of simplicity and clarity and is not meant to imply that the feature or component cannot be employed in the embodiments described in connection with that figure. It will be understood that embodiments of this invention may include any one, more than one, or all of the features described here. Also, embodiments of this invention may additionally or alternatively include other features not listed here.

As discussed above, many turbine engines include a stack of rotors, referred to as a rotor stack, coupled to a tie-shaft. These rotors are loaded with an axial compressive force at the time of assembly. During engine operation, the rotors are known to axially shrink, which causes the tie-shaft assembly to loosen and the axial rotor stack load to drop.

This invention provides a system and method for measurement and monitoring of rotor stack load in an engine, which can be implemented for use with an aviation engine, such as a turbine engine. As discussed in greater detail below, the disclosed embodiments use at least one sensor, such as a strain gauge, for monitoring the axial stack load over the life cycle of the engine. Using the disclosed embodiments, it is possible to identify a loss in the axial stack load without having to disassemble the aircraft or engine.

Note that while this invention is described with respect to aviation turbine engines, it will be understood that the principles disclosed here are also applicable to other types of devices or environments. For example, the turbine engine may alternatively be a turbojet turbine engine, a turboprop turbine engine, a turboshaft turbine engine, an auxiliary power unit, an industrial turbine engine for a power plant, or any other type of turbine engine in which measuring and monitoring of rotor stack load would be useful.

Figure 1 illustrates an example system 100 in which measurement and monitoring of rotor stack load can be performed according to this invention. As shown in Figure 1, the system 100 includes multiple user devices 102a-102d, at least one network 104, at least one server 106, and at least one database 108. Note, however, that other combinations and arrangements of components may also be used here.

In this example, each user device 102a-102d is coupled to or communicates over the network 104. Communications between each user device 102a-102d and a network 104 may occur in any suitable manner, such as via a wired or wireless connection. Each user device 102a-102d represents any suitable device or system used by at least one user to provide information to the server 106 or database 108 or to receive information from the server 106 or database 108. Example types of information may include sensor readings, angular measurements, and the like.

Any suitable number(s) and type(s) of user devices 102a-102d may be used in the system 100. **In** this particular example, the user device 102a represents a desktop computer, the user device 102b represents a laptop computer, the user device 102c represents a smartphone, and the user device 102d represents a tablet computer. However, any other or additional types of user devices may be used in the system 100. Each user device 102a-102d includes any suitable structure configured to transmit and/or receive information.

The network 104 facilitates communication between various components of the system 100. For example, the network 104 may communicate Internet Protocol (IP) packets, frame relay frames, Asynchronous Transfer Mode (ATM) cells, or other suitable information between network addresses. The network 104 may include one or more local area networks (LANs), metropolitan area networks (MANs), wide area networks (WANs), all or a portion of a global network such as the Internet, or any other communication system or systems at one or more locations. The network 104 may also operate according to any appropriate communication protocol or protocols.

The server 106 is coupled to the network 104 and is coupled to or otherwise communicates with the database 108. The server 106 supports the retrieval of information from the database 108 and the processing of that information. Of course, the database 108 may also be used within the server 106 to store information, in which case the server 106 may store the information itself.

Among other things, the server 106 processes information used in performing measurement and monitoring of rotor stack load, such as in a turbine engine. The server 106 includes any suitable structure configured to perform measurement and monitoring of rotor stack load. In some embodiments, the server 106 includes one or more processors, one or more memories, and one or more communication interfaces. Note, however, that the server 106 may be implemented in any suitable manner to perform the described functions. Also note that while described as a server here, the device(s) actually implementing the server 106 may represent one or more desktop computers, laptop computers, server computers, or other computing or data processing devices or systems.

The database 108 stores various information used, generated, or collected by the server 106 and the user devices 102a-102d. For example, the database 108 may store sensor readings, angular measurements, and the like.

There are a number of possible ways to implement the system 100 in order to provide the described functionality for performing measurement and monitoring of rotor stack load. For example, in some embodiments, the server 106 and database 108 are owned, operated, or managed by a common entity. In other embodiments, the server 106 and database 108 are owned, operated, or managed by different entities. Note, however, that this invention is not limited to any particular organizational implementation.

Although Figure 1 illustrates one example of a system 100 for measurement and monitoring of rotor stack load, various changes may be made to Figure 1. For example, the system 100 may include any number of user devices 102a-102d, networks 104, servers 106, and databases 108. Also, while Figure 1 illustrates that one database 108 is coupled to the network 104, any number of databases 108 may reside at any location or locations accessible by the server 106, and each database 108 may be coupled directly or indirectly to the server 106. In addition, while Figure 1 illustrates one example operational environment in which measurement and monitoring of rotor stack load can be performed, this functionality may be used in any other suitable system.

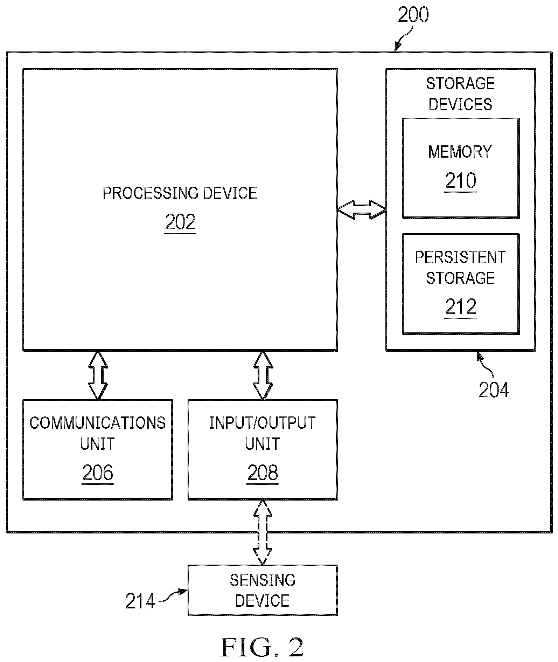

Figure 2 illustrates an example device 200 for measurement and monitoring of rotor stack load according to this invention. One or more instances of the device 200 may, for example, be used to at least partially implement the functionality of the server 106 of Figure 1. However, the functionality of the server 106 may be implemented in any other suitable manner. Also, the same or similar arrangement of components may be used to at least partially implement the functionality of one or more of the user devices 102a-102d in Figure 1. However, the functionality of each user device 102a-102d may be implemented in any other suitable manner.

As shown in Figure 2, the device 200 denotes a computing device or system that includes at least one processing device 202, at least one storage device 204, at least one communications unit 206, and at least one input/output (I/O) unit 208. The processing device 202 may execute instructions that can be loaded into a memory 210. The processing device 202 includes any suitable number(s) and type(s) of processors or other devices in any suitable arrangement. Example types of processing devices 202 include one or more microprocessors, microcontrollers, digital signal processors (DSPs), application specific integrated circuits (ASICs), field programmable gate arrays (FPGAs), or discrete circuitry.

The memory 210 and a persistent storage 212 are examples of storage devices 204, which represent any structure(s) capable of storing and facilitating retrieval of information (such as data, program code, and/or other suitable information on a temporary or permanent basis). The memory 210 may represent a random access memory or any other suitable volatile or non-volatile storage device(s). The persistent storage 212 may contain one or more components or devices supporting longer-term storage of data, such as a read only memory, hard drive, Flash memory, or optical disc.

The communications unit 206 supports communications with other systems or devices. For example, the communications unit 206 can include a network interface card or a wireless transceiver facilitating communications over a wired or wireless network, such as the network 104. The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also provide a connection for at least one sensing device 214, such as a strain gauge, that can be used for performing measurement and monitoring of rotor stack load, such as described in greater detail below. The I/O unit 208 may also send output to a display, printer, or other suitable output device. Note, however, that the I/O unit 208 may be omitted if the device 200 does not require local I/O, such as when the device 200 can be accessed remotely.

In some embodiments, the instructions executed by the processing device 202 can include instructions that implement the functionality of the server 106 described above. For example, the instructions executed by the processing device 202 can include instructions for performing measurement and monitoring of rotor stack load.

Although Figure 2 illustrates one example of a device 200 for measurement and monitoring of rotor stack load, various changes may be made to Figure 2. For example, computing devices and systems come in a wide variety of configurations, and Figure 2 does not limit this invention to any particular computing device or system.

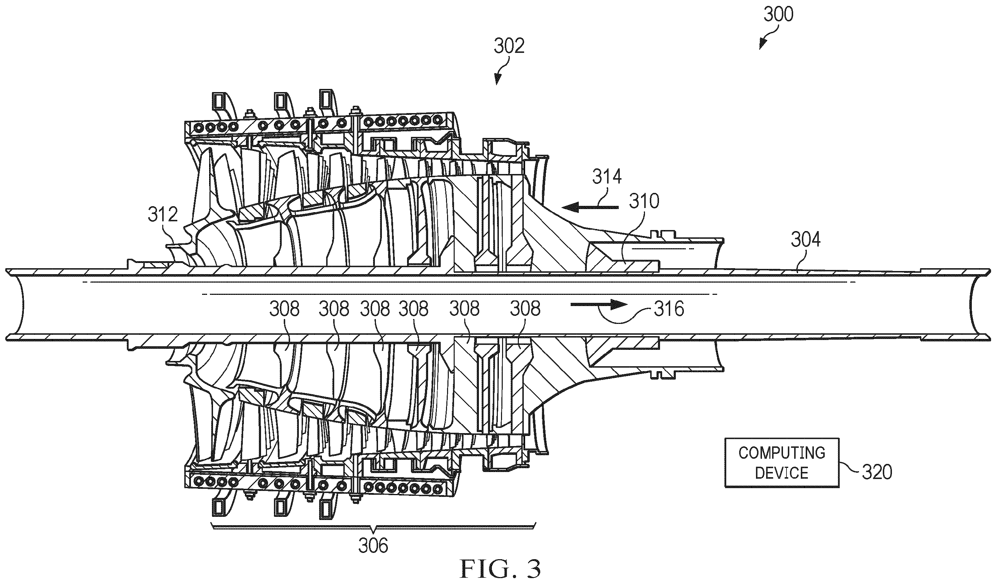

Figure 3 illustrates an example system 300 for measurement and monitoring of rotor stack load according to this invention. As shown in Figure 3, the system 300 includes a tie-shaft 304, a rotor stack 306, a nut 310, at least one sensor 312, and at least one computing device 320. The view in Figure 3 is an axial view showing the tie-shaft 304, the rotor stack 306, and the nut 310 in cross-section. The tie-shaft 304, the rotor stack 306, and the nut 310 form part of an engine 302, such as a turbine engine.

The tie-shaft 304 is a rotating shaft that is configured to rotate about its center line, which is the axis of rotation. The tie-shaft 304 is mounted inside the engine 302, and various blades or other features can be mounted around a circumference of the tie-shaft 304 so as to form a rotating assembly that rotates with the tie-shaft 304.

The rotor stack 306 includes a series of rotors 308 that are assembled onto the tie-shaft 304 and disposed adjacent to each other in the axial direction of the tie-shaft 304. Due to friction forces, the rotors 308 forming the rotor stack 306 are configured to rotate together about the axis of the tie-shaft 304, in conjunction with the rotation of the tie-shaft 304.

The nut 310 is coupled to the tie-shaft 304 (such as via a threaded connection) and is provided to secure the rotor stack 306 into its axial position. As the nut 310 is advanced against the rotor stack 306, the nut 310 applies a compressive load 314 to the rotors 308 of the rotor stack 306, as indicated by the arrow in Figure 3. An opposite tension load 316 is formed on the tie-shaft 304 and corresponds to the compressive load 314 on the rotor stack 306, resulting in static equilibrium within the engine 302. These loads are generated at the time of assembly of the engine 302, such as before the engine 302 is mounted on the aircraft. Per engineering requirements, the tension load 316 (and corresponding compressive load 314) are supposed to be greater than or equal to a predetermined threshold load value, which can be referred to as an original equipment manufacturer (OEM) condition.

When the engine 302 is in use in the field, the parts may experience some deformation. For example, over time, the rotor stack 306 may become slightly smaller (such as approximately 0.010 inch (0.254 mm) smaller) in the dimension corresponding to the axis of the tie-shaft 304. As a result, the tension load 316 can reduce to a value that is less than the required tension load. This relationship between the length of the rotor stack 306 and the tension load 316 can be expressed by the following:

$$x\delta = F$$

where δ is the reduction in length of the rotor stack 306 (such as stack compression loss), *F* is the reduction in the tension load 316 (such as stack axial force loss), and x is a predetermined constant that is determined by the physical properties of the assembly. At OEM condition (such as at the time of assembly according to engineering requirements), δ = 0 inches (0 mm) and *F* = 0 lbf (0 N).

Since proper operation of the engine 302 depends on frictional forces present in the rotor stack 306, a reduction in the compression load 314 and the tension load 316 (also referred to as load loss) can cause problems during operation of the engine 302. In conventional turbine engines, it is necessary to disassemble the engine in order to measure the load loss. This is, of course, disruptive and costly.

In contrast, the system 300 includes the sensor 312 and the computing device 320, which are provided to measure and monitor load in the rotor stack 306. The sensor 312 represents any suitable device for measuring a compressive force, such as strain, on an object. In some embodiments, the sensor 312 is a wireless strain gauge, although other types of sensors are possible and within the scope of this invention. The sensor 312 can represent (or be represented by) the sensing device 214 of Figure 2. In the system 300, the sensor 312 is provided to measure the compression load 314 present in the rotor stack 306. As shown in Figure 3, the sensor 312 is coupled to an exterior surface of the rotor stack 306 after the compression load 314 is already applied, so that the sensor 312 reads a zero measurement in the OEM condition.

While Figure 3 shows one sensor 312, in some embodiments, multiple sensors 312 can be used. For example, two or more sensors 312 could be positioned at different locations around the circumference of the rotor stack 306. In general, the location(s) of the sensor(s) 312 are selected such that the sensor(s) 312 are accessible to maintenance personnel or others during a maintenance window. Additionally or alternatively, the location(s) of the sensor(s) 312 are selected such that the sensor(s) 312 are thermally isolated from high-temperature areas of the engine 302.

The computing device 320 is wirelessly connected to the sensor 312 and is configured to receive measurement data of the compression load 314 from the sensor 312. The computing device 320 can represent (or be represented by) the computing device 200 of Figure 2. In some embodiments, the computing device 320 may represent, include, or be a part of, a full authority digital engine control (FADEC) system.

The computing device 320 is configured to receive the tension load measurements from the sensor 312 and then determine whether the compression load 314 is within the predetermined acceptable range and, in particular, is greater than or equal to a threshold value. By receiving multiple tension load measurements from the sensor 312 over a time period, the computing device 320 is able to determine if there is a change in the compression load 314 over time. The computing device 320 can communicate the change in the compression load 314 as an output message that can be reviewed by a monitoring system, maintenance personnel, or the like.

In some embodiments, the output message can be coded according to a severity level, such as green (information), yellow (warning), and red (alarm) levels. For example, a green message may be output when the compression load 314 is well within the preferred range and is not approaching an out-of-range value. A yellow message can indicate that the compression load 314 is still within the preferred range, but is increasing toward the threshold value. A red message can indicate that the compression load 314 is about to become higher than the threshold value or is already above the threshold value.

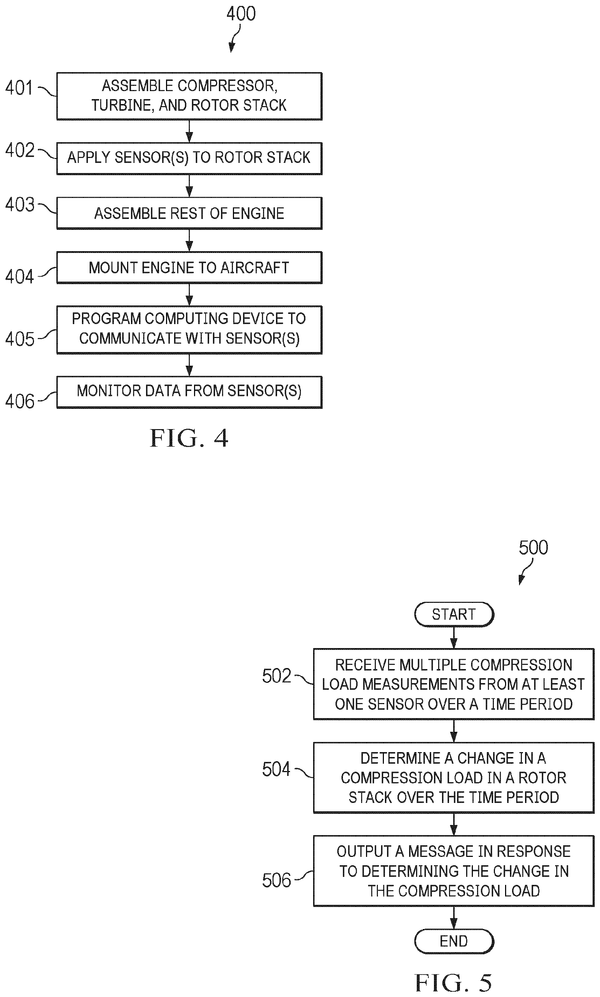

Figure 4 illustrates an example process flow 400 for assembly and use of the system 300 according to this invention. As shown in Figure 4, the process flow 400 includes operation 401, in which a compressor, a turbine, and the rotor stack 306 are assembled onto the tie-shaft 304 with a design intent axial stack load, which ties the assembly together.

At operation 402, one or more sensors 312 (such as wireless strain gauges) are applied to the outside diameter of the tie-shaft 304 at the front hub. The sensor(s) 312 are inspected to ensure the sensor(s) 312 are operating as expected. At operation 403, the rest of the engine 302 is assembled, per the current OEM assembly procedures. At operation 404, the engine 302 is shipped and mounted on the aircraft, with the sensor(s) 312 in the air frame. At operation 405, the computing device 320 is programmed to wirelessly receive the measurement data from the sensor(s) 312.

At operation 406, the computing device 320 monitors the response from the sensor(s) 312 repeatedly over time, such as after every prescribed number of flight cycles. In some embodiments, the information from the sensor(s) 312 can be downloaded from the computing device 320 to another monitoring system, either on demand or according to some schedule, such as a daily download. The monitoring system can be associated with engine maintenance, for example.

Using the system 300, interested personnel can monitor for stack load loss during operation and without disassembling the engine 302. By comparing the stack load loss to design predictions, the engine manufacturers can also predict the overall health of a particular engine, as related to the rotor stack load. This can be very important for engine reliability and maintainability.

Although Figures 3 and 4 illustrate an example system for measurement and monitoring of rotor stack load and related details, various changes may be made to Figures 3 and 4. For example, while Figure 3 shows six rotors 308 in the rotor stack 306, actual implementations can include other numbers of rotors 308. In addition, various components shown and described above may be combined, further subdivided, replicated, rearranged, or omitted and additional components may be added according to particular needs.

Figure 5 illustrates an example method 500 for measurement and monitoring of rotor stack load according to this invention. For ease of explanation, the method 500 is described as being performed using the system 300 of Figure 3. However, the method 500 could be used with any other suitable device or system.

As shown in Figure 5, multiple compression load measurements are received from at least one sensor over a time period at step 502. The at least one sensor is coupled to a tie-shaft configured to rotate about an axis. The multiple compression load measurements relate to a compression load on a rotor stack. The rotor stack includes multiple rotors, is coupled to the tie-shaft, and is configured to rotate with the tie-shaft. A nut is coupled to the tie-shaft and is configured to apply a tension load to the tie-shaft, resulting in the compression load on the rotor stack. This may include, for example, the computing device 320 receiving multiple measurements of the compression load 314 from the sensor(s) 312 over time.

A change in the compression load over the time period is determined at step 504 based on the received compression load measurements. This may include, for example, the computing device 320 determining a change in the compression load 314 based on the measurements from the sensor(s) 312. At least one of an information message, a warning message, and an alarm message is output at step 506 in response to determining the change in the compression load. This may include, for example, the computing device 320 outputting an information message, a warning message, and/or an alarm message.

Although Figure 5 illustrates one example of a method 500 for measurement and monitoring of rotor stack load, various changes may be made to Figure 5. For example, while shown as a series of steps, various steps shown in Figure 5 could overlap, occur in parallel, occur in a different order, or occur multiple times. Moreover, some steps could be combined or removed and additional steps could be added according to particular needs.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive (HDD), a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present invention should not be read as implying that any particular element, step, or function is an essential or critical element that must be included in the claim scope. The scope of patented subject matter is defined only by the allowed claims.

While this invention has described certain embodiments and generally associated methods, alterations and permutations of these embodiments and methods will be apparent to those skilled in the art. Accordingly, the above description of example embodiments does not define or constrain this invention. Other changes, substitutions, and alterations are also possible without departing from the spirit and scope of this invention, as defined by the following claims.

## Claims

1. A system (300) comprising:

    a tie-shaft (304) configured to rotate about an axis;
    a rotor stack (306) tied to the tie-shaft (304) and configured to rotate with the tie-shaft (304), the rotor stack (306) comprising multiple rotors (308);
    a nut (310) coupled to the tie-shaft (304) and configured to apply a tension load (316) to the tie-shaft (304), resulting in an opposite compression load (314) on the rotor stack (306);
    at least one sensor (312) coupled to the rotor stack (306) and configured to measure the compression load (314) on the rotor stack (306); and
    at least one processing device (202) configured to:

        receive multiple compression load measurements from the at least one sensor (312) over a time period; and
        determine a change in the compression load (314) over the time period based on the received compression load measurements.

2. The system (300) of claim 1, wherein the at least one processing device (202) is further configured, in response to determining the change in the compression load (314), to output at least one of an information message, a warning message, or an alarm message.

3. The system (300) of claim 1 or 2, wherein the at least one processing device (202) is further configured, in response to determining that the compression load (314) has increased above a threshold value, to output an alarm message to a monitoring system.

4. The system (300) of any preceding claim, wherein the at least one sensor (312) comprises a strain gauge mounted to an exterior surface of the rotor stack (306).

5. The system (300) of any preceding claim, wherein the at least one sensor (312) comprises multiple strain gauges positioned at different locations around a circumference of the rotor stack (306).

6. The system (300) of any preceding claim, wherein the tie-shaft (304), the rotor stack (306), and the nut (310) comprise part of a turbine engine (302).

7. The system (300) of claim 6, wherein the at least one sensor (312) is thermally isolated from high-temperature areas of the turbine engine (302).

8. A device (200) comprising:
    at least one processing device (202) configured to:

        receive multiple compression load measurements over a time period from at least one sensor (312) coupled to a rotor stack (306), the rotor stack (306) tied to a tie-shaft (304) and configured to rotate about an axis with the tie-shaft (304), the rotor stack (306) comprising multiple rotors (308), the multiple compression load measurements related to a compression load (314) on the rotor stack (306), wherein a nut (310) is coupled to the tie-shaft (304) and configured to apply a tension load (316) to the tie-shaft (304), resulting in the compression load (314) on the rotor stack (306); and
        determine a change in the compression load (314) over the time period based on the received compression load measurements.

9. The device (200) of claim 8, wherein:

    the at least one processing device (202) is further configured, in response to determining the change in the compression load (314), to output at least one of an information message, a warning message, or an alarm message; and/or
    the at least one processing device (202) is further configured, in response to determining that the compression load (314) has increased above a threshold value, to output an alarm message to a monitoring system.

10. The device (200) of claim 8 or 9, wherein:

    the at least one sensor (312) comprises a strain gauge mounted to an exterior surface of the rotor stack (306); and/or
    the at least one sensor (312) comprises multiple strain gauges mounted at different locations around a circumference of the rotor stack (306).

11. The device (200) of any of claims 8 to 10, wherein the tie-shaft (304), the rotor stack (306), and the nut (310) comprise part of a turbine engine (302), and wherein, optionally, the at least one sensor (312) is thermally isolated from high-temperature areas of the turbine engine (302).

12. A method (500) comprising:

    (502) receiving multiple compression load measurements over a time period from at least one sensor (312) coupled to a rotor stack (306), the rotor stack (306) tied to a tie-shaft (304) and configured to rotate about an axis with the tie-shaft (304), the rotor stack (306) comprising multiple rotors (308), the multiple compression load measurements related to a compression load (314) on the rotor stack (306), wherein a nut (310) is coupled to the tie-shaft (304) and configured to apply a tension load (316) to the tie-shaft (304), resulting in the compression load (314) on the rotor stack (306); and
(504) determining a change in the compression load (314) over the time period based on the received compression load measurements.

**13.** The method (500) of claim 12, further comprising:

(506) in response to determining the change in the compression load (314), outputting at least one of an information message, a warning message, or an alarm message; and/or
(506) in response to determining that the compression load (314) has increased above a threshold value, outputting an alarm message to a monitoring system.

**14.** The method (500) of claim 12 or 13, wherein:

the at least one sensor (312) comprises a strain gauge mounted to an exterior surface of the rotor stack (306); and/or
the at least one sensor (312) comprises multiple strain gauges mounted at different locations around a circumference of the rotor stack (306).

**15.** The method (500) of any of claims 12 to 14, wherein the tie-shaft (304), the rotor stack (306), and the nut (310) comprise part of a turbine engine (302).

FIG. 1

200

PROCESSING DEVICE

202

STORAGE
DEVICES

MEMORY

210

PERSISTENT
STORAGE

212

204

COMMUNICATIONS
UNIT

206

INPUT/OUTPUT
UNIT

208

SENSING
DEVICE

214

FIG. 2

FIG. 3

400

| 401 | ASSEMBLE COMPRESSOR, TURBINE, AND ROTOR STACK |
| 402 | APPLY SENSOR(S) TO ROTOR STACK |
| 403 | ASSEMBLE REST OF ENGINE |
| 404 | MOUNT ENGINE TO AIRCRAFT |
| 405 | PROGRAM COMPUTING DEVICE TO COMMUNICATE WITH SENSOR(S) |
| 406 | MONITOR DATA FROM SENSOR(S) |

FIG. 4

500

START

| 502 | RECEIVE MULTIPLE COMPRESSION LOAD MEASUREMENTS FROM AT LEAST ONE SENSOR OVER A TIME PERIOD |
| 504 | DETERMINE A CHANGE IN A COMPRESSION LOAD IN A ROTOR STACK OVER THE TIME PERIOD |
| 506 | OUTPUT A MESSAGE IN RESPONSE TO DETERMINING THE CHANGE IN THE COMPRESSION LOAD |

END

FIG. 5

Europäisches
Patentamt
European
Patent Office
Office européen
des brevets

# EUROPEAN SEARCH REPORT

**Application Number**

EP 25 17 3879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 155 014 A (UNIV TSINGHUA) 23 July 2021 (2021-07-23) | 8-11 | INV. F01D5/06 |
| Y | * the whole document * | 1-7, 12-15 | F01D17/04 G01B7/16 |
| | ----- | | |
| Y | US 2014/017087 A1 (BENJAMIN DANIEL [US] ET AL) 16 January 2014 (2014-01-16) * figures 1-3 * | 1,2,4-7, 12-15 | |
| | ----- | | |
| Y | US 2021/348527 A1 (MILNE TREVOR [GB]) 11 November 2021 (2021-11-11) * page 3, paragraph 54 - page 4, paragraph 59; figure 4 * | 3 | |
| | ----- | | |

**TECHNICAL FIELDS
SEARCHED (IPC)**

F01D
G01B

The present search report has been drawn up for all claims

| Place of search | Date of completion of the search | Examiner |
|---|---|---|
| Munich | 15 October 2025 | Rau, Guido |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 17 3879

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2025

| Patent document cited in search report | | Publication date | Patent family member(s) | | Publication date |
|---|---|---|---|---|---|
| CN 113155014 | A | 23-07-2021 | NONE | | |
| US 2014017087 | A1 | 16-01-2014 | EP | 2872747 A2 | 20-05-2015 |
| | | | US | 2014017087 A1 | 16-01-2014 |
| | | | WO | 2014011269 A2 | 16-01-2014 |
| US 2021348527 | A1 | 11-11-2021 | CN | 112955630 A | 11-06-2021 |
| | | | EP | 3647537 A1 | 06-05-2020 |
| | | | EP | 3874127 A1 | 08-09-2021 |
| | | | ES | 3012856 T3 | 10-04-2025 |
| | | | US | 2021348527 A1 | 11-11-2021 |
| | | | WO | 2020088811 A1 | 07-05-2020 |

EPO FORM P0459

For more details about this annex : see Official Journal of the European Patent Office, No. 12/82